# FASCICULE DE BREVET EUROPEEN

(11) **EP 4 455 002 B1**
(45) Date de publication et mention de la délivrance du brevet: **31.12.2025**
(21) Numéro de dépôt: 24154547.4
(22) Date de dépôt: 29.01.2024
(51) Int. Cl.: B64C 27/82

(54) **PROCÉDE ET AERONEF MUNI D'AU MOINS UN RÉFLECTEUR ACOUSTIQUE POUR UN SYSTÈME ROTOR CARÈNE**
VERFAHREN UND FLUGZEUG MIT MINDESTENS EINEM AKUSTISCHEN REFLEKTOR FÜR EIN CAREN-ROTORSYSTEM
METHOD AND AIRCRAFT PROVIDED WITH AT LEAST ONE ACOUSTIC REFLECTOR FOR A FREE STANDING ROTOR SYSTEM

(30) Priorité: 25.04.2023 FR 2304139
(43) Date de publication de la demande: 30.10.2024
(73) Titulaire: Airbus Helicopters, 13725 Marignane Cedex (FR)
(72) Inventeur: CAILLET, Julien, 13320 BOUC BEL AIR (FR); GUNTZER, Frédéric, 13180 GIGNAC LA NERTHE (FR); CARIOU, Charles, 13016 MARSEILLE (FR)
(74) Mandataire: GPI Brevets

(56) Documents cités:
- CN-A- 113 022 847
- FR-A1- 2 719 549
- GB-A- 953 301
- US-A- 3 583 659

## Description

La présente invention concerne un aéronef muni d'au moins un réflecteur acoustique pour un système rotor caréné, et un procédé de réduction du bruit.

Un hélicoptère peut comprendre un rotor principal et un système de contrôle du mouvement en lacet caréné connu sous la marque fenestron^{®}.

Un tel système de contrôle du mouvement en lacet caréné comporte un rotor muni de pales agencées dans une veine ménagée dans une carène. La carène fait office de dérive et est portée par une poutre de queue. La poutre de queue peut porter un empennage en amont de la carène selon un sens de déplacement vers l'avant de l'aéronef.

En particulier, la carène peut comprendre un convergent prolongé par un chemin de pales entourant les pales, puis par un divergent. Des aubes de redressement peuvent en outre être aussi agencées dans la veine.

D'un point de vue acoustique, un tel système de contrôle du mouvement en lacet caréné présente un intérêt, notamment en empêchant une diffusion des bruits sous, vers l'avant et vers l'arrière du giravion de par la présence de la carène, alors qu'un rotor arrière non caréné diffuse du bruit dans toutes les directions.

Un tel système de contrôle du mouvement en lacet caréné peut aussi être optimisé acoustiquement en ajustant par exemple la répartition en azimut des pales et des aubes ainsi que la forme des pales.

Les documents FR 2719549 A1, FR 2719553 A1, EP2671798 B1 et EP 1 778 951 B1 décrivent des systèmes de contrôle du mouvement en lacet à rotor caréné. Les documents CN113022847, US3583659 and GB953301 sont également cités.

Le document FR 2969120 A1 présente une pale pour un rotor caréné.

Le document EP 2913270 B1 présente un rotor caréné muni d'un carénage d'arbre de transmission ayant un bord d'attaque équipé d'un moyen d'atténuation acoustique associé.

La présente invention a alors pour objet de proposer un aéronef innovant pour atténuer les nuisances acoustiques générées par un rotor caréné.

L'invention vise un aéronef muni d'un système à rotor caréné, ledit système comprenant une carène et un rotor muni de pales, les pales étant disposées dans une veine d'air délimitée par la carène et mobiles en rotation autour d'un axe de rotation du rotor, la carène s'étendant longitudinalement selon un sens arrière à partir d'une structure de l'aéronef jusqu'à une extrémité de queue, la carène s'étendant selon un sens en élévation d'un fond vers un sommet et transversalement d'un premier côté vers un deuxième côté.

L'aéronef comporte au moins un réflecteur acoustique, ledit réflecteur acoustique comprenant un tronçon réfléchissant acoustiquement situé transversalement par rapport à la veine d'air pour réfléchir selon une direction s'éloignant du sol des ondes acoustiques sortant de la veine d'air en se dirigeant vers le sol.

Un tel aéronef peut notamment être un giravion muni d'une voilure tournante.

Les termes « haut », « bas », « dessus », « dessous », « avant », « arrière », « supérieure », « inférieure » sont des termes relatifs à appréhender au regard d'un individu présent sur un sol horizontal lorsque l'aéronef repose sur ce même sol.

Les termes « longitudinalement », « transversalement » et en « élévation » permettent aussi de définir des directions relatives.

En fonctionnement, le système à rotor caréné peut émettre des ondes acoustiques qui sortent de la veine d'air. Dès lors, cet aéronef comporte un ou deux réflecteurs acoustiques disposés notamment sur le côté de la veine d'air. L'expression « situé transversalement par rapport à la veine d'air » signifie que chaque réflecteur est situé en dessous et sur le côté selon un sens transversal par rapport à la veine d'air, ce sens transversal pouvant être parallèle à l'axe de tangage de l'aéronef. Le ou les tronçons réfléchissants acoustiquement sont donc situés au moins sur le côté par rapport à la veine d'air de manière à recevoir des ondes acoustiques provenant de la veine d'air et dirigées vers le sol lorsque l'aéronef a un angle en tangage nul par exemple, contrairement à un empennage porté par une poutre de queue en avant d'une carène ou un empennage situé au sommet d'une dérive. La carène comprenant, selon le sens en élévation, une partie inférieure munie du fond et située sous la veine d'air, puis une partie supérieure munie dudit sommet et située au-dessus de la veine d'air, chaque réflecteur est alors par exemple intégré à la partie inférieure, fixé à la partie inférieure et/ou en vis-à-vis transversalement de la partie inférieure. L'expression « pour réfléchir au moins selon une direction s'éloignant du sol des ondes acoustiques sortant de la veine d'air en se dirigeant vers le sol » signifient que les réflecteurs acoustiques réfléchissent vers le haut, donc en s'éloignant du sol, au moins une partie des ondes acoustiques émises vers le bas en direction du sol. Par suite, au moins une partie des ondes acoustiques émises par le système à rotor caréné, en vol ou au sol, est renvoyée vers le ciel et n'atteint pas un éventuel individu présent sur le sol. Il en résulte une atténuation acoustique pour cet individu pouvant atteindre plusieurs décibels en fonction de l'harmonique concerné.

Ledit tronçon réfléchissant acoustiquement est convexe vu du sol, à savoir par exemple par un observateur situé sous le tronçon réfléchissant acoustiquement.

Le réflecteur acoustique a une forme concave vu du ciel. Cette forme favorise la réflexion des ondes acoustiques dans un secteur aérien en les éloignant donc du sol, permettant ainsi de limiter la gêne acoustique pour un individu présent au sol.

Par exemple, le tronçon réfléchissant acoustiquement peut former une cuvette.

L'aéronef peut de plus comprendre une ou plusieurs des caractéristiques qui suivent, prises seules ou en combinaison.

Selon une possibilité, ledit tronçon réfléchissant acoustiquement s'étend sous et au droit de l'axe de rotation ainsi qu'au moins dans un plan horizontal lorsque l'aéronef repose sur un sol horizontal, ce plan horizontal passant sous la veine d'air lorsque l'aéronef repose sur le sol horizontal.

**L'expression** « ledit tronçon réfléchissant acoustiquement s'étend sous et au droit de l'axe de rotation » signifie que lorsque l'aéronef repose sur un sol horizontal alors un axe géométrique vertical passant par l'axe de rotation coupe le tronçon réfléchissant acoustiquement.

Dès lors, une onde acoustique sortant de la veine d'air et se dirigeant vers le sol peut impacter le réflecteur acoustique et être réfléchie vers le ciel en s'éloignant donc du sol.

Selon une possibilité compatible avec les précédentes, ledit tronçon réfléchissant acoustiquement est sécant à un plan vertical-transversal contenant l'axe de rotation du rotor et vertical lorsque l'aéronef repose sur un sol horizontal.

Le plan vertical-transversal peut être parallèle à l'axe de lacet de l'aéronef, voire à l'axe de tangage de l'aéronef. Le plan vertical-transversal peut être orthogonal à un plan longitudinal-vertical de l'aéronef.

Le plan longitudinal-vertical peut être parallèle à l'axe de roulis et à l'axe de lacet de l'aéronef, voire peut comprendre cet axe de roulis et cet axe de lacet de l'aéronef.

Eventuellement, ledit tronçon réfléchissant acoustiquement est agencé dans un secteur angulaire présent sous l'axe de rotation, lorsque l'aéronef est sur un sol horizontal ,en s'étendant longitudinalement entre un premier plan incliné et un deuxième plan incliné contenant l'axe de rotation du rotor, le premier plan incliné étant obtenu par rotation dudit plan vertical-transversal autour de l'axe de rotation du rotor selon un premier sens de rotation d'un premier angle supérieur ou égal à un angle longitudinal minimal, le deuxième plan incliné étant obtenu par rotation dudit plan vertical-transversal autour de l'axe de rotation du rotor selon un deuxième sens de rotation opposé au premier sens de rotation d'un deuxième angle supérieur ou égal à l'angle longitudinal minimal.

L'angle longitudinal minimal peut être défini par essais, tests ou simulations. Par exemple, cet angle longitudinal minimal peut être compris entre 0 et 30 degrés, éventuellement entre 10 et 30 degrés, voire entre 25 et 30 degrés et possiblement de l'ordre de 27 degrés.

Cet angle longitudinal minimal permet d'obtenir un tronçon réfléchissant présentant longitudinalement une dimension minimale, et par exemple une corde minimale.

Selon une possibilité compatible avec les précédentes, ledit tronçon réfléchissant acoustiquement peut s'étendre transversalement en envergure jusqu'à un plan limite, le plan limite étant obtenu, lorsque l'aéronef est sur un sol horizontal, par rotation autour d'un axe de pivotement d'un plan de référence horizontal orthogonal au plan vertical-transversal et passant par un point de référence de l'axe de rotation du rotor selon un sens de rotation vers le tronçon réfléchissant d'un angle inférieur ou égal à un angle transversal maximal, l'axe de pivotement pouvant passer par le point de référence et/ou être orthogonal au plan vertical-transversal, le point de référence étant éventuellement situé dans la veine d'air.

Le point de référence peut, par exemple, se trouver à égale distance d'une première surface de passage et d'une deuxième surface de passage délimitant la veine d'air. Selon un autre exemple, le point de référence peut se trouver à l'intersection d'axes de pas des pales du rotor caréné.

L'angle transversal maximal peut être défini par essais, tests ou simulations. Par exemple, cet angle transversal maximal peut être compris entre 0 et 40 degrés, éventuellement entre 15 et 40 degrés et possiblement de l'ordre de 20 degrés.

Cet angle transversal maximal permet d'obtenir un tronçon réfléchissant présentant en envergure latéralement une dimension minimale.

Selon une possibilité compatible avec les précédentes, ledit au moins un réflecteur acoustique peut être porté par la carène et s'étendre transversalement à partir de la carène, voire peut être intégré à la carène.

Alternativement, ledit au moins un réflecteur acoustique peut être porté par une poutre de queue de la structure et s'étendre selon le sens arrière d'une emplanture connectée à la poutre de queue jusqu'au tronçon réfléchissant acoustiquement agencé transversalement par rapport à la carène.

Bien que porté par la poutre de queue, le réflecteur acoustique peut réfléchir vers le ciel, en s'éloignant donc du sol, des ondes acoustiques sortant de la veine d'air et dirigées vers le sol. Eventuellement, un espace peut séparer le réflecteur acoustique de la carène.

Selon une possibilité compatible avec les précédentes, ledit au moins un réflecteur acoustique peut être un empennage.

De manière innovante, l'empennage ne se trouve alors pas au niveau de la poutre de queue ou au sommet de la carène mais sous la veine d'air pour remplir de plus une fonction acoustique.

Selon une possibilité compatible avec les précédentes, ledit aéronef peut comporter un actionneur connecté au réflecteur acoustique pour rendre mobile le réflecteur acoustique par rapport à la carène, ledit aéronef comportant au moins un contrôleur configuré pour piloter ledit actionneur en fonction d'au moins une entrée ou une interface homme-machine connectée à l'actionneur. Ainsi, l'actionneur peut être piloté par un contrôleur et/ou une interface homme-machine.

La position du réflecteur acoustique peut être commandée par le contrôleur pour optimiser le comportement acoustique du système rotor caréné dans des conditions prédéterminées, et éventuellement pour optimiser le comportement aérodynamique de l'aéronef dans d'autres conditions. La position du réflecteur acoustique peut être commandée par le contrôleur pour modifier l'équilibre de la machine, et par exemple son angle de tangage, afin de positionner l'aéronef dans une configuration favorable d'un point de vue acoustique.

Ainsi, le réflecteur acoustique peut par exemple être positionné dans un premier mode de fonctionnement dans une première position limitant sa traînée aérodynamique. A l'inverse, le réflecteur acoustique peut par exemple être positionné dans un deuxième mode de fonctionnement dans une deuxième position maximisant la réflexion vers le ciel d'ondes acoustiques qui s'éloignent ainsi du sol selon une direction dont au moins une composante est positive selon le sens en élévation.

A titre d'exemple, le contrôleur peut être configuré pour piloter l'actionneur afin de positionner un réflecteur acoustique dans la première position lorsque l'aéronef se déplace à une altitude supérieure à un seuil d'altitude, et dans la deuxième position lorsque l'aéronef se déplace à une altitude inférieure ou égale au seuil d'altitude.

**D'autres** entrées peuvent le cas échéant être utilisées et/ou le réflecteur acoustique peut être positionné dans une plus large gamme de positions en fonction du besoin.

Selon un autre exemple, une interface homme-machine peut piloter l'actionneur.

Selon une possibilité compatible avec les précédentes, ladite carène pouvant comprendre successivement un convergent annulaire puis un chemin de pales annulaire et un divergent annulaire, ledit au moins un réflecteur acoustique peut comporter un réflecteur acoustique du côté dudit divergent.

L'aéronef peut comprendre un ou deux réflecteurs acoustiques, et au moins un réflecteur acoustique du côté du divergent pour limiter l'émission d'ondes acoustiques par ce divergent.

Selon une possibilité compatible avec les précédentes, ladite carène pouvant comprendre successivement un convergent annulaire puis un chemin de pales annulaire et un divergent annulaire, ledit au moins un réflecteur acoustique comporte un réflecteur acoustique présentant une face prolongeant un secteur du divergent ou du convergent.

Eventuellement, le réflecteur acoustique peut être une partie intégrante de la carène. Certains organes de la partie inférieure de la carène délimitent la veine d'air et une autre section de la partie inférieure de la carène située en dehors de la veine d'air forme un réflecteur acoustique.

Selon une possibilité compatible avec les précédentes, ledit au moins un réflecteur acoustique et ladite carène peuvent former une pièce unitaire.

Selon une possibilité compatible avec les précédentes, l'aéronef peut comporter deux dits réflecteurs acoustiques agencés transversalement respectivement de part et d'autre au moins de la carène.

Chaque réflecteur acoustique peut participer à la réduction du bruit émis par le système rotor caréné de l'aéronef vers un individu situé en dehors de l'aéronef.

Eventuellement, les deux réflecteurs acoustiques sont asymétriques au regard d'un plan vertical-longitudinal passant par la carène.

Les ondes acoustiques émises par le rotor caréné transversalement des deux côtés de la veine d'air peuvent être différentes. Les deux réflecteurs peuvent avoir des formes prenant en considération ces différences.

Selon une possibilité compatible avec les précédentes, ladite veine d'air peut s'étendre d'une première surface de passage à une deuxième surface de passage parallèles entre elles, la première surface de passage et la deuxième surface de passage étant orthogonales à l'axe de rotation du rotor.

Selon une possibilité compatible avec les précédentes, une face réfléchissante dudit au moins un réflecteur impactée par lesdites ondes acoustiques peut comporter un traitement acoustique de surface.

L'expression « traitement acoustique de surface » désigne un organe apte à limiter la réflexion d'ondes acoustiques. Un traitement acoustique de surface peut comprendre, par exemple, des cavités. Par exemple, la face réfléchissante comporte une peau perforée dénommée « liner » en langue anglaise.

Outre un aéronef, l'invention vise aussi un procédé appliqué par cet aéronef.

Ainsi, l'invention vise aussi un procédé de réduction du bruit émis vers le sol avec un aéronef muni d'un système à rotor caréné, ledit système comprenant une carène et un rotor muni de pales, les pales étant disposées dans une veine d'air délimitée par la carène et mobiles en rotation autour d'un axe de rotation du rotor, la carène s'étendant longitudinalement selon un sens arrière à partir d'une structure de l'aéronef jusqu'à une extrémité de queue, la carène s'étendant selon un sens en élévation d'un fond vers un sommet et transversalement d'un premier côté vers un deuxième côté.

Ce procédé comporte un agencement transversalement par rapport à la veine d'air d'au moins un réflecteur acoustique comprenant un tronçon réfléchissant acoustiquement réfléchissant au moins selon une direction s'éloignant du sol des ondes acoustiques qui sortent de la veine d'air en se dirigeant vers le sol; ledit tronçon réfléchissant acoustiquement étant convexe vu du sol et concave vu du ciel.

L'invention et ses avantages apparaîtront avec plus de détails dans le cadre de la description qui suit avec des exemples donnés à titre illustratif en référence aux figures annexées qui représentent :
la figure 1, un schéma illustrant un aéronef selon l'invention et le procédé associé,
la figure 2, une vue en perspective du système rotor caréné de la figure 1,
la figure 3, une vue de côté d'un système rotor caréné,
la figure 4, une vue arrière d'un système rotor caréné,
la figure 5, une vue en coupe d'un système rotor caréné coopérant avec un réflecteur acoustique,
la figure 6, une vue en coupe d'un réflecteur acoustique porté par une poutre de queue,
la figure 7, une vue en perspective de réflecteurs acoustiques formant un empennage, et
la figure 8, un schéma illustrant un actionneur pilotant une position d'un réflecteur acoustique par rapport à la carène d'un système rotor caréné.

Les éléments présents dans plusieurs figures distinctes sont affectés d'une seule et même référence.

Trois directions AX, AY et AZ orthogonales les unes par rapport aux autres sont représentées sur les figures. La direction AX représente un axe parallèle à l'axe de roulis de l'aéronef illustré. La direction AY représente un axe parallèle à l'axe de tangage de l'aéronef illustré et la direction AZ représente un axe parallèle à l'axe de lacet de l'aéronef illustré.

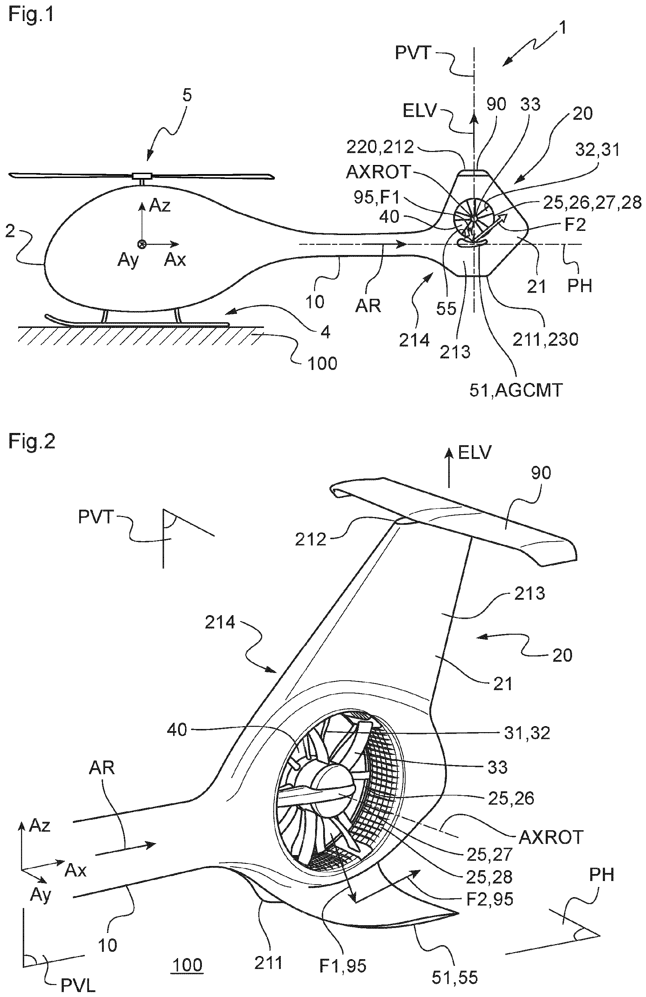

La figure 1 présente un exemple d'aéronef 1 selon l'invention.

Un tel aéronef 1 peut comprendre une structure 2 portant une voilure tournante 5. Cette structure 2 peut comprendre une partie avant portant la voilure tournante prolongée d'une poutre de queue 10. La partie avant peut être pourvue par exemple d'une cabine et/ou d'un cockpit. L'aéronef 1 peut comprendre au moins un atterrisseur 4 porté par la structure 2 pour reposer sur un sol 100 lorsque l'aéronef 1 est posé.

Par ailleurs, l'aéronef 1 comporte un système 20 à rotor caréné. Le système 20 à rotor caréné peut former un rotor de contrôle du mouvement en lacet de l'aéronef 1, par exemple. Ainsi, l'aéronef 1 peut, selon l'exemple de la figure 1, être un hélicoptère comprenant un rotor principal 5, le système 20 à rotor caréné formant un système de contrôle du mouvement en lacet.

En particulier, le système 20 à rotor caréné est muni d'une carène 21. La carène 21 s'étend longitudinalement selon un sens arrière AR à partir d'un de la structure 2 jusqu'à une extrémité de queue, voire le cas échéant à partir de la poutre de queue 10. Le sens arrière est contraire à un sens d'avancement de l'aéronef vers l'avant usuel.

En outre, la carène 21 s'étend selon un sens en élévation ELV d'un fond 211 vers un sommet 212. Le fond 211 peut porter une béquille ou un organe déformable faisant office de béquille.

Enfin, la carène 21 s'étend transversalement, par exemple selon un axe parallèle à l'axe de tangage AY, d'un premier côté 213 vers un deuxième côté 214.

Par ailleurs, la carène 21 comporte en outre une enveloppe 25 qui délimite une veine d'air 40 traversante. Une partie inférieure 230 de la carène 40 est située sous la veine d'air 40, une partie supérieure 220 de la carène étant au-dessus de la veine d'air 40. Cette veine d'air 40 s'étend selon un sens transversal du premier côté 213 au deuxième côté 214. De l'air peut ainsi traverser transversalement de part en part la carène 21 en entrant dans la veine d'air 40 via une première surface de passage 401 et en sortant de cette veine d'air 40 via une deuxième surface de passage 402.

Le système 20 à rotor caréné comprend en outre un rotor 31 muni de pales 32 logées dans la veine d'air 40. Les pales 32 sont mobiles en rotation autour d'un axe de rotation AXROT du rotor 31 dans la veine d'air 40. La carène 21 représente donc un carénage qui entoure le rotor 31 autour de l'axe de rotation de ce rotor 31.

En aval du rotor 31, le système 20 à rotor caréné peut par ailleurs comprendre un redresseur 33 muni d'une pluralité d'aubes.

Par ailleurs, l'enveloppe de la carène 21 peut comprendre un convergent annulaire 26 ouvert au niveau de la première surface de passage 401 illustrée par la suite, un chemin de pales annulaire 27 entourant les pales 32 puis un divergent annulaire 28 entourant le cas échéant les aubes du redresseur 33 et débouchant sur l'extérieur au niveau de la deuxième surface de passage 402 illustrée par la suite. La première surface de passage 401 et la deuxième surface de passage 402 peuvent être parallèles entre elles, et/ou orthogonales à l'axe de rotation AXROT.

La littérature illustre des systèmes à rotor caréné de ce type.

Un ou des organes du système 20 à rotor caréné peuvent comporter un système d'atténuation du bruit, tel qu'une peau particulière par exemple, et/ou peuvent être définies pour limiter l'émission d'ondes acoustiques. Par exemple, les aubes et /ou les pales 32 sont positionnées en azimut autour de l'axe de rotation AXROT selon une loi de répartition en azimut particulière.

Pour lutter contre les nuisances sonores, le procédé de l'invention comporte l'agencement AGCMT, transversalement par rapport à la veine d'air, d'au moins un réflecteur acoustique 51, 52 muni d'un tronçon réfléchissant acoustiquement 55. Le tronçon réfléchissant acoustiquement 55 a pour fonction de réfléchir selon une direction s'éloignant du sol, et donc selon un vecteur ayant une composante positive selon le sens en élévation ELV, des ondes acoustiques 95 qui sortent de la veine d'air 40 en se dirigeant vers le sol 100.

Ainsi, des ondes acoustiques s'échappent de la veine d'air 40, lors de la rotation du rotor 31 en vol ou au sol. Ces ondes acoustiques 95 sont susceptibles de gêner un individu présent sur le sol 100.

Selon l'invention, le ou les réflecteurs acoustiques 51, 52 sont positionnés de manière à réfléchir vers le ciel, et donc en s'éloignant du sol, au moins une partie de ces ondes acoustiques 95 dirigées vers le sol 100, que l'aéronef 1 soit en vol ou au sol. Au lieu d'atteindre le sol 100 et un individu, ces ondes acoustiques 95 impactent un réflecteur acoustique 51, 52 selon la flèche F1 et sont dirigées vers le haut à distance de l'individu selon la flèche F2.

Eventuellement, une face réfléchissante d'un tronçon réfléchissant acoustiquement 55 d'un réflecteur acoustique 51,52 impactée par les ondes acoustiques 95 peut comporter un traitement acoustique de surface.

Les figures 1 à 8 présentent divers exemples de réalisation de l'invention afin d'illustrer diverses caractéristiques de l'invention.

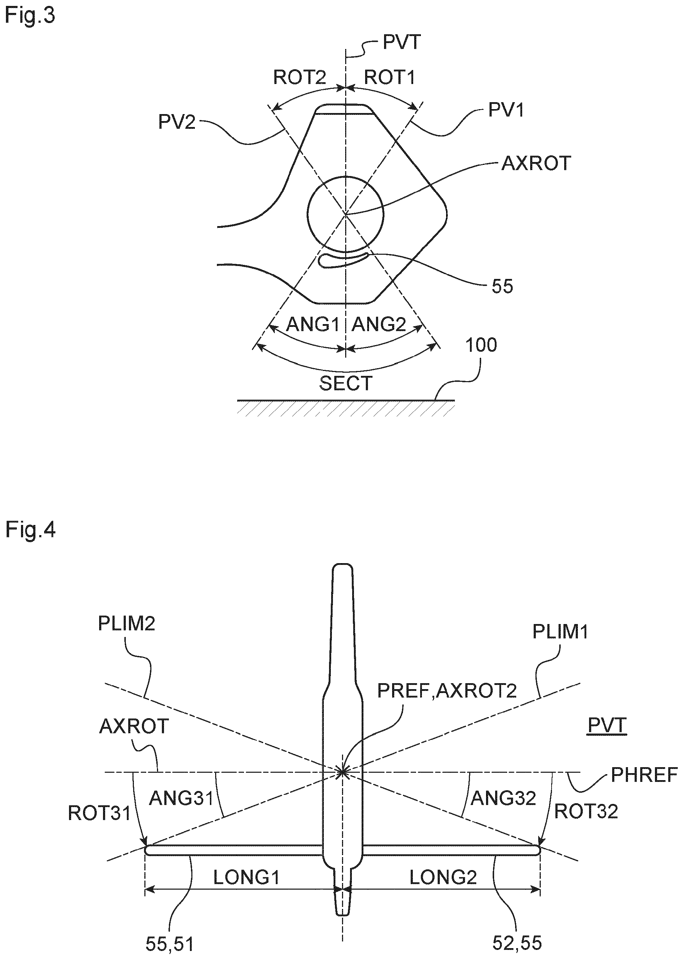

Conformément aux exemples notamment des figures 2 et 3, l'aéronef 1 peut comprendre un unique réflecteur acoustique 51 disposé transversalement d'un côté de la veine d'air 40. En particulier le réflecteur acoustique 51 peut le cas échéant se trouver du côté du divergent annulaire 28.

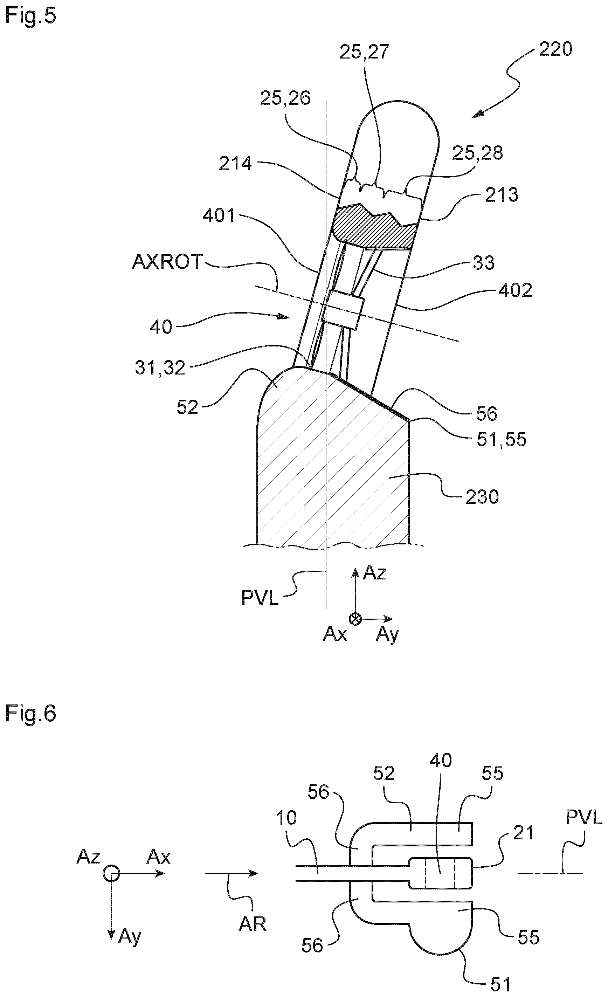

A l'inverse, les figures 5 à 7 illustrent la possibilité de disposer plusieurs réflecteurs acoustiques, et par exemple deux réflecteurs acoustiques 51, 52, respectivement de part et d'autre de la veine d'air 40.

Dans ce cas et tels qu'illustrés sur les figures 5 et 6, les deux réflecteurs acoustiques 51, 52 peuvent être asymétriques au regard d'un plan vertical-longitudinal PVL. Un tel plan vertical-longitudinal PVL peut être un plan parallèle à l'axe de roulis AX de l'aéronef 1 passant par la carène 21, et vertical lorsque l'aéronef 1 repose sur un sol horizontal.

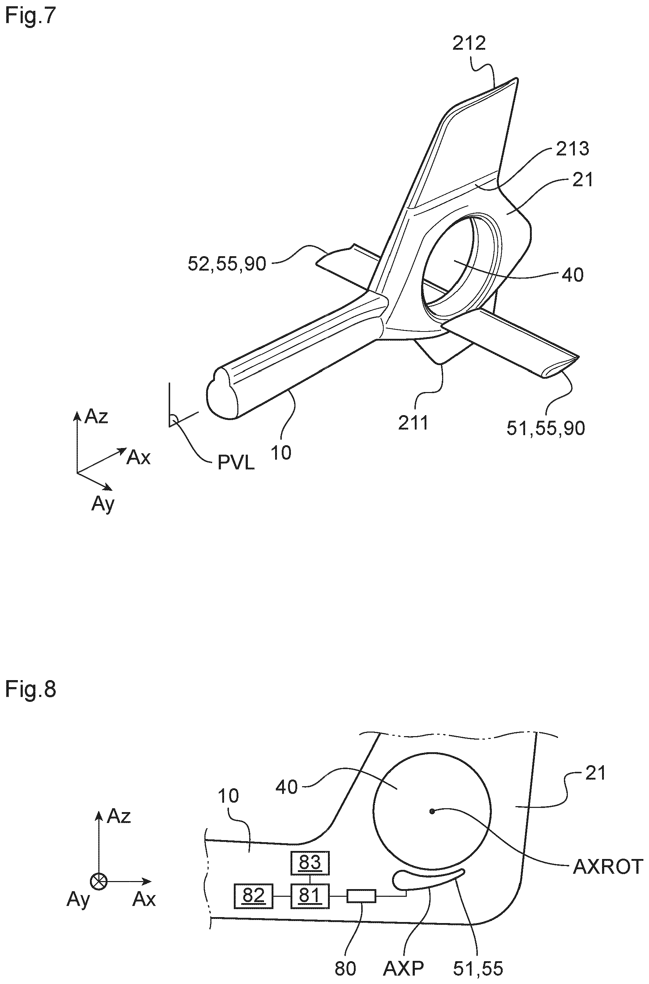

Alternativement, les deux réflecteurs acoustiques 51, 52 peuvent être symétriques au regard d'un plan vertical-longitudinal PVL selon la figure 7.

Le terme « chaque » est utilisée par la suite par commodité, aussi bien en présence d'un unique réflecteur acoustique 51 que de plusieurs réflecteurs acoustiques 51, 52 pour faciliter la lecture.

Selon l'invention telle que revendiquée et en référence à la figure 2, chaque tronçon réfléchissant acoustiquement 55 est convexe vu du sol 100. Indépendamment de cette forme du réflecteur acoustique 51, 52, le tronçon réfléchissant acoustiquement 55 est agencé transversalement par rapport à la carène veine d'air 40.

Dès lors, lorsque l'aéronef 1 repose sur un sol 100 horizontal alors le tronçon réfléchissant acoustiquement 55 peut s'étendre d'une part sous l'axe de rotation AXROT, voire au droit de l'axe de rotation AXROT parallèlement au sens en élévation et, d'autre part, au moins dans un plan horizontal PH, ce plan horizontal PH passant sous la veine d'air 40.

Par ailleurs, chaque réflecteur acoustique 51, 52, et en particulier son tronçon réfléchissant acoustiquement 55, peut être sécant à un plan vertical-transversal PVT contenant l'axe de rotation AXROT. Le plan vertical-transversal PVT est en outre vertical lorsque l'aéronef 1 repose sur un sol 100 horizontal.

Selon la figure 3, chaque réflecteur acoustique 51 peut en particulier s'étendre dans un secteur angulaire SECT présent sous l'axe de rotation AXROTR entre un premier plan incliné PV1 et un deuxième plan incliné PV2 contenant chacun l'axe de rotation AXROT. Le premier plan incliné PV1 est obtenu par rotation du plan vertical-transversal PVT autour de l'axe de rotation AXROT selon un premier sens de rotation ROT1 d'un premier angle ANG1 supérieur ou égal à un angle longitudinal minimal, le deuxième plan incliné PV2 étant obtenu par rotation dudit plan vertical-transversal PVT autour de l'axe de rotation AXROT selon un deuxième sens de rotation ROT2 opposé au premier sens de rotation d'un deuxième angle ANG2 supérieur ou égal à l'angle longitudinal minimal.

Selon la figure 4, chaque tronçon réfléchissant acoustiquement 55 peut s'étendre transversalement en envergure jusqu'à un plan limite PLIM1, PLIM2. Le plan limite PLIM1, PLIM2 d'un tronçon réfléchissant acoustiquement 55 est obtenu, lorsque l'aéronef 1 est sur un sol horizontal, par rotation autour d'un axe de pivotement AXROT2 d'un plan de référence PHREF horizontal orthogonal au plan vertical-transversal PVT et passant par un point de référence PREF de l'axe de rotation AXROT selon un sens de rotation ROT31, ROT32 vers le tronçon réfléchissant d'un angle ANG31, ANG32 inférieur ou égal à un angle transversal maximal. L'axe de pivotement peut passer par le point de référence et/ou être orthogonal au plan vertical-transversal. L'envergure LONG1, LONG2 de chaque tronçon réfléchissant acoustiquement 55 est ainsi optimisée.

Indépendamment de ces diverses caractéristiques, chaque réflecteur acoustique 51, 52 peut être porté par la carène 21, et s'étend donc transversalement à partir de la carène 21. La carène 21 et chaque réflecteur acoustique 51, 52 peuvent former une seule et même pièce.

Selon la figure 5, un réflecteur acoustique 51 peut présenter une face 56 prolongeant un secteur du divergent 28. De la même manière, un réflecteur acoustique 52 peut présenter une face 56 prolongeant un secteur du convergent 26.

Un réflecteur acoustique 51, 52 peut même être réalisé à l'aide d'une partie inférieure 230 épaisse de la carène 21. En effet, comme indiqué précédemment, la veine d'air 40 peut s'étendre selon l'axe de rotation AXROT d'une première surface de passage 401 à une deuxième surface de passage 402 parallèles entre elles et orthogonales à l'axe de rotation AXROT. La veine d'air 40 s'étend en outre en élévation entre une partie inférieure 230 et une partie supérieure 220 de la carène 21. La partie inférieure 230 peut être plus épaisse que la partie supérieure 220 pour s'étendre en dehors de la veine d'air 40 et former au moins un réflecteur acoustique 51, 52.

Alternativement, la figure 6 illustre une autre possibilité. Dans ce cas, au moins un réflecteur acoustique 51, 52 est porté par la poutre de queue 10. Ce réflecteur acoustique 51, 52 s'étend alors, selon le sens arrière AR, d'une emplanture 56 connectée à la poutre de queue 10 jusqu'au tronçon réfléchissant acoustiquement 55 agencé transversalement par rapport à la carène 21.

Selon une autre caractéristique et la figure 7, chaque réflecteur acoustique 51, 52 peut former un empennage 90. Le réflecteur acoustique 51,52 a alors une forme profilée générant une déportance durant un vol d'avancement.

Un empennage 90 dédié peut être porté par la carène 21 tel qu'illustré sur les figures 1 et 2, ou par la poutre de queue 10. Le réflecteur acoustique 51, 52 n'a alors éventuellement pas des profils optimisés pour remplir une fonction d'empennage.

Selon une autre caractéristique illustrée sur la figure 8, chaque réflecteur acoustique 51, 52 peut être mobile par rapport à la carène 21.

Dès lors, l'aéronef 1 comporte un actionneur 80 connecté au réflecteur acoustique 51, 52 pour le déplacer, en particulier pour le rendre mobile en rotation selon l'exemple illustré.

Cet actionneur 80 peut être en communication avec un contrôleur 81 configuré pour piloter l'actionneur 80 en fonction d'au moins une entrée. Une telle entrée peut être un paramètre mesuré par au moins un senseur 82 en communication filaire ou non filaire avec le contrôleur 81. Le contrôleur 81 peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Alternativement ou de manière complémentaire, l'actionneur 80 ou le contrôleur 81 peut être relié à une interface homme-machine 83. Une telle interface homme-machine 83 peut comprendre un bouton, un écran tactile, une commande vocale...

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles, le cadre de l'invention étant définie par les revendications suivantes.

## Revendications

1. Aéronef (1) muni d'un système (20) à rotor caréné, ledit système (20) comprenant une carène (21) et un rotor (31) muni de pales (32), les pales (32) étant disposées dans une veine d'air (40) délimitée par la carène (21) et mobiles en rotation autour d'un axe de rotation (AXROT) du rotor (31), la carène (21) s'étendant longitudinalement selon un sens arrière (AR) à partir d'une structure (2) de l'aéronef jusqu'à une extrémité de queue, la carène (21) s'étendant selon un sens en élévation (ELV) d'un fond (211) vers un sommet (212) et transversalement d'un premier côté (213) vers un deuxième côté (214),
**caractérisé en ce que** ledit aéronef (1) comporte au moins un réflecteur acoustique (51, 52), ledit réflecteur acoustique (51, 52) comprenant un tronçon réfléchissant acoustiquement (55) situé transversalement par rapport à la veine d'air pour réfléchir selon une direction s'éloignant du sol des ondes acoustiques (95) sortant de la veine d'air (40) en se dirigeant vers le sol (100); ledit tronçon réfléchissant acoustiquement (55) étant convexe vu du sol (100) et concave vu du ciel.

2. Aéronef selon la revendication 1,
**caractérisé en ce que** ledit tronçon réfléchissant acoustiquement (55) s'étend sous et au droit de l'axe de rotation (AXROT) ainsi qu'au moins dans un plan horizontal (PH) lorsque l'aéronef (1) repose sur un sol (100) horizontal, ce plan horizontal (PH) passant sous la veine d'air (40) lorsque l'aéronef (1) repose sur le sol (100) horizontal.

3. Aéronef selon l'une quelconque des revendications 1 à 2,
**caractérisé en ce que** ledit tronçon réfléchissant acoustiquement (55) est sécant à un plan vertical-transversal (PVT) contenant l'axe de rotation (AXROT) et vertical lorsque l'aéronef (1) repose sur un sol (100) horizontal.

4. Aéronef selon la revendication 3,
**caractérisé en ce que** ledit tronçon réfléchissant acoustiquement (55) est agencé dans un secteur angulaire (SECT), présent sous l'axe de rotation lorsque l'aéronef est sur un sol horizontal, en s'étendant longitudinalement entre un premier plan incliné (PV1) et un deuxième plan incliné (PV2) contenant l'axe de rotation (AXROT), le premier plan incliné (PV1) étant obtenu par rotation dudit plan vertical-transversal (PVT) autour de l'axe de rotation (AXROT) selon un premier sens de rotation (ROT1) d'un premier angle (ANG1) supérieur ou égal à un angle longitudinal minimal, le deuxième plan incliné (PV2) étant obtenu par rotation dudit plan vertical-transversal (PVT) autour de l'axe de rotation (AXROT) selon un deuxième sens de rotation (ROT2) opposé au premier sens de rotation d'un deuxième angle (ANG2) supérieur ou égal à l'angle longitudinal minimal.

5. Aéronef selon l'une quelconque des revendications 3 à 4,
**caractérisé en ce que** ledit tronçon réfléchissant acoustiquement (55) s'étend transversalement en envergure jusqu'à un plan limite (PLIM1 PLIM2), le plan limite (PLIM1, PLIM2) étant obtenu, lorsque l'aéronef (1) est sur un sol horizontal, par rotation autour d'un axe de pivotement (AXROT2) d'un plan de référence (PHREF) horizontal selon un sens de rotation (ROT31, ROT32) vers le tronçon réfléchissant d'un angle (ANG31, ANG32) inférieur ou égal à un angle transversal maximal, le plan de référence (PHREF) horizontal étant orthogonal au plan vertical-transversal (PVT) et passant par un point de référence (PREF) de l'axe de rotation (AXROT), l'axe de pivotement (AXROT2) passant par le point de référence (PREF) et étant orthogonal au plan vertical-transversal (PVT).

6. Aéronef selon l'une quelconque des revendications 1 à 5,
**caractérisé en ce que** ledit au moins un réflecteur acoustique (51, 52) est porté par la carène (21) et s'étend transversalement à partir de la carène (21).

7. Aéronef selon l'une quelconque des revendications 1 à 6,
**caractérisé en ce que** ledit au moins un réflecteur acoustique (51, 52) est porté par une poutre de queue (10) de la structure (2) et s'étend selon le sens arrière (AR) d'une emplanture (56) connectée à la poutre de queue (10) jusqu'au tronçon réfléchissant acoustiquement (55).

8. Aéronef selon l'une quelconque des revendications 1 à 7,
**caractérisé en ce que** ledit au moins un réflecteur acoustique (51, 52) est un empennage (90).

9. Aéronef selon l'une quelconque des revendications 1 à 8,
**caractérisé en ce que** ledit aéronef (1) comporte un actionneur (80) connecté au réflecteur acoustique (51, 52) pour rendre mobile le réflecteur acoustique (51, 52) par rapport à la carène (21), ledit aéronef (1) comportant au moins un contrôleur (81) configuré pour piloter ledit actionneur (80) en fonction d'au moins une entrée ou d'une interface homme-machine (83) connectée à l'actionneur (80).

10. Aéronef selon l'une quelconque des revendications 1 à 9,
**caractérisé en ce que** ladite carène (21) comprenant successivement un convergent annulaire (26) puis un chemin de pales annulaire (27) et un divergent annulaire (28), ledit au moins un réflecteur acoustique (51,52) comporte un réflecteur acoustique (51) du côté dudit divergent (28).

11. Aéronef selon l'une quelconque des revendications 1 à 10,
**caractérisé en ce que** ladite carène (21) comprenant successivement un convergent annulaire (26) puis un chemin de pales annulaire (27) et un divergent annulaire (28), ledit au moins un réflecteur acoustique (51,52) comporte un réflecteur acoustique (51) présentant une face (56) prolongeant un secteur du divergent (28) ou du convergent (26).

12. Aéronef selon l'une quelconque des revendications 1 à 11,
**caractérisé en ce que** ledit aéronef (1) comporte deux dits réflecteurs acoustiques (51, 52) agencés transversalement respectivement de part et d'autre au moins de la carène (21).

13. Aéronef selon la revendication 12,
**caractérisé en ce que** lesdits deux réflecteurs acoustiques (51, 52) sont asymétriques au regard d'un plan vertical-longitudinal (PVL) passant par la carène (21).

14. Aéronef selon l'une quelconque des revendications 1 à 13,
**caractérisé en ce que** ladite veine d'air (40) s'étend d'une première surface de passage (401) à une deuxième surface de passage (402) parallèles entre elles, la première surface de passage (401) et la deuxième surface de passage (402) étant orthogonales à l'axe de rotation (AXROT).

15. Aéronef selon l'une quelconque des revendications 1 à 14,
**caractérisé en ce qu'**une face réfléchissante dudit au moins un réflecteur acoustique (51,52) impactée par lesdites ondes acoustiques comporte un traitement acoustique de surface.

16. Procédé de réduction du bruit émis vers le sol avec un aéronef (1) muni d'un système (20) à rotor caréné, ledit système (20) comprenant une carène (21) et un rotor (31) muni de pales (32), les pales (32) étant disposées dans une veine d'air (40) délimitée par la carène (21) et mobiles en rotation autour d'un axe de rotation (AXROT) du rotor (31), la carène (21) s'étendant longitudinalement selon un sens arrière (AR) à partir d'une structure (2) jusqu'à une extrémité de queue, la carène (21) s'étendant selon un sens en élévation (ELV) d'un fond (211) vers un sommet (212) et transversalement d'un premier côté (213) vers un deuxième côté (214),
**caractérisé en ce que** ledit procédé comporte un agencement (AGCMT) transversalement par rapport à la veine d'air d'au moins un réflecteur acoustique (51, 52) comprenant un tronçon réfléchissant acoustiquement (55) réfléchissant au moins selon une direction s'éloignant du sol des ondes acoustiques (95) qui sortent de la veine d'air (40) en se dirigeant vers le sol (100) ; ledit tronçon réfléchissant acoustiquement (55) étant convexe vu du sol (100) et concave vu du ciel.

## Patentansprüche

1. Luftfahrzeug (1) mit einem System (20) mit verkleidetem Rotor, wobei das System (20) eine Verkleidung (21) und einen Rotor (31) mit Blättern (32) umfasst, wobei die Blätter (32) in einem von der Verkleidung (21) begrenzten Luftstrom (40) angeordnet und um eine Drehachse (AXROT) des Rotors (31) drehbar sind, wobei sich die Verkleidung (21) in Längsrichtung von einer Struktur (2) des Luftfahrzeugs in Rückwärtsrichtung (AR) bis zu einem Heckende erstreckt, wobei sich die Verkleidung (21) in Höhenrichtung (ELV) von einem unteren Ende (211) zu einem oberen Ende (212) und quer von einer ersten Seite (213) zu einer zweiten Seite (214) erstreckt,
**dadurch gekennzeichnet, dass** das Luftfahrzeug (1) mindestens einen Schallreflektor (51, 52) umfasst, wobei der Schallreflektor (51, 52) einen schallreflektierenden Abschnitt (55) umfasst, der quer zum Luftstrom angeordnet ist, um die aus dem Luftstrom (40) austretenden und zum Boden (100) gerichteten Schallwellen (95) in einer vom Boden wegführenden Richtung zu reflektieren; wobei der schallreflektierende Abschnitt (55) vom Boden (100) aus gesehen konvex und vom Himmel aus gesehen konkav ist.

2. Luftfahrzeug nach Anspruch 1,
**dadurch gekennzeichnet, dass** sich der schallreflektierende Abschnitt (55) unterhalb der Drehachse (AXROT) und senkrecht zu dieser sowie mindestens in einer horizontalen Ebene (PH) erstreckt, wenn das Luftfahrzeug (1) auf einem horizontalen Boden (100) steht, wobei diese horizontale Ebene (PH) unter dem Luftstrom (40) verläuft, wenn das Luftfahrzeug (1) auf dem horizontalen Boden (100) steht.

3. Luftfahrzeug nach einem der Ansprüche 1 bis 2,
**dadurch gekennzeichnet, dass** der schallreflektierende Abschnitt (55) eine Vertikal-Transversalebene (PVT) schneidet, die die Drehachse (AXROT) enthält und vertikal ist, wenn das Luftfahrzeug (1) auf einem horizontalen Boden (100) steht.

4. Luftfahrzeug nach Anspruch 3,
**dadurch gekennzeichnet, dass** der schallreflektierende Abschnitt (55) in einem Winkelbereich (SECT) angeordnet ist, der sich unterhalb der Drehachse befindet, wenn das Luftfahrzeug auf einem horizontalen Boden steht, und sich in Längsrichtung zwischen einer ersten geneigten Ebene (PV1) und einer zweiten geneigten Ebene (PV2) erstreckt, die die Drehachse (AXROT) enthalten, wobei die erste geneigte Ebene (PV1) durch Drehung der Vertikal-Transversalebene (PVT) um die Drehachse (AXROT) in einer ersten Drehrichtung (ROT1) um einen ersten Winkel (ANG1) erhalten wird, der größer oder gleich einem minimalen Längswinkel ist, wobei die zweite geneigte Ebene (PV2) durch Drehung der Vertikal-Transversalebene (PVT) um die Drehachse (AXROT) in einer zweiten Drehrichtung (ROT2) entgegengesetzt zur ersten Drehrichtung um einen zweiten Winkel (ANG2) größer oder gleich dem minimalen Längswinkel erhalten wird.

5. Luftfahrzeug nach einem der Ansprüche 3 bis 4,
**dadurch gekennzeichnet, dass** sich der schallreflektierende Abschnitt (55) quer in der Spannweite bis zu einer Begrenzungsebene (PLIM1, PLIM2) erstreckt, wobei die Begrenzungsebene (PLIM1, PLIM2), wenn sich das Luftfahrzeug (1) auf horizontalem Boden befindet, durch Drehen einer horizontalen Referenzebene (PHREF) um eine Schwenkachse (AXROT2) in einer Drehrichtung (ROT31, ROT32) um einen Winkel (ANG31, ANG32) kleiner oder gleich einem maximalen Querwinkel erhalten wird, wobei die horizontale Referenzebene (PHREF) orthogonal zur Vertikal-Transversalebene (PVT) ist und durch einen Referenzpunkt (PREF) der Drehachse (AXROT) verläuft, wobei die Schwenkachse (AXROT2) durch den Referenzpunkt (PREF) verläuft und orthogonal zur Vertikal-Transversalebene (PVT) ist.

6. Luftfahrzeug nach einem der Ansprüche 1 bis 5,
**dadurch gekennzeichnet, dass** der mindestens eine Schallreflektor (51, 52) von der Verkleidung (21) getragen ist und sich quer von der Verkleidung (21) aus erstreckt.

7. Luftfahrzeug nach einem der Ansprüche 1 bis 6,
**dadurch gekennzeichnet, dass** der mindestens eine Schallreflektor (51, 52) von einem Heckausleger (10) der Struktur (2) getragen ist und sich in Rückwärtsrichtung (AR) von einer mit dem Heckausleger (10) verbundenen Wurzel (56) bis zum schallreflektierenden Abschnitt (55) erstreckt.

8. Luftfahrzeug nach einem der Ansprüche 1 bis 7,
**dadurch gekennzeichnet, dass** der mindestens eine Schallreflektor (51, 52) ein Leitwerk (90) ist.

9. Luftfahrzeug nach einem der Ansprüche 1 bis 8,
**dadurch gekennzeichnet, dass** das Luftfahrzeug (1) einen mit dem Schallreflektor (51, 52) verbundenen Aktuator (80) aufweist, um den Schallreflektor (51, 52) relativ zum Rumpf (21) beweglich zu machen, wobei das Luftfahrzeug (1) mindestens eine Steuerung (81) umfasst, die konfiguriert ist, um den Aktuator (80) in Abhängigkeit von mindestens einer Eingabe oder einer Mensch-Maschine-Schnittstelle (83) zu steuern, die mit dem Aktuator (80) verbunden ist.

10. Luftfahrzeug nach einem der Ansprüche 1 bis 9,
**dadurch gekennzeichnet, dass** die Verkleidung (21) nacheinander einen ringförmigen Konvergenzbereich (26), dann einen ringförmigen Blattweg (27) und einen ringförmigen Divergenzbereich (28) umfasst, und dass der mindestens eine Schallreflektor (51, 52) einen Schallreflektor (51) auf der Seite des Divergenzbereichs (28) umfasst.

11. Luftfahrzeug nach einem der Ansprüche 1 bis 10,
**dadurch gekennzeichnet, dass** die Verkleidung (21) nacheinander einen ringförmigen Konvergenzbereich (26), dann einen ringförmigen Blattweg (27) und einen ringförmigen Divergenzbereich (28) umfasst, und dass der mindestens eine Schallreflektor (51, 52) einen Schallreflektor (51) umfasst, der eine Fläche (56) aufweist, die einen Sektor des Divergenzbereichs (28) oder des Konvergenzbereichs (26) verlängert.

12. Luftfahrzeug nach einem der Ansprüche 1 bis 11,
**dadurch gekennzeichnet, dass** das Luftfahrzeug (1) zwei Schallreflektoren (51, 52) umfasst, die quer auf beiden Seiten mindestens der Verkleidung (21) angeordnet sind.

13. Luftfahrzeug nach Anspruch 12,
**dadurch gekennzeichnet, dass** die beiden Schallreflektoren (51, 52) in Bezug auf eine durch die Verkleidung (21) verlaufende vertikale Längsebene (PVL) asymmetrisch sind.

14. Luftfahrzeug nach einem der Ansprüche 1 bis 13,
**dadurch gekennzeichnet, dass** sich der Luftstrom (40) von einer ersten Durchflussfläche (401) zu einer zweiten Durchflussfläche (402) erstreckt, die parallel zueinander sind, wobei die erste Durchflussfläche (401) und die zweite Durchflussfläche (402) orthogonal zur Drehachse (AXROT) sind.

15. Luftfahrzeug nach einem der Ansprüche 1 bis 14,
**dadurch gekennzeichnet, dass** eine reflektierende Fläche des mindestens einen Schallreflektors (51, 52), auf die die Schallwellen treffen, eine akustische Oberflächenbehandlung aufweist.

16. Verfahren zur Reduzierung des zum Boden abgegebenen Lärms bei einem Luftfahrzeug (1), das mit einem System (20) mit verkleidetem Rotor ausgestattet ist, wobei das System (20) eine Verkleidung (21) und einen Rotor (31) mit Blättern (32) umfasst, wobei die Blätter (32) in einem von der Verkleidung (21) begrenzten Luftstrom (40) angeordnet und um eine Drehachse (AXROT) des Rotors (31) drehbar sind, wobei sich die Verkleidung (21) in Längsrichtung von einer Struktur (2)in Rückwärtsrichtung (AR) bis zu einem Heckende erstreckt, wobei sich die Verkleidung (21) in einer Höhenrichtung (ELV) von einem unteren Ende (211) zu einem oberen Ende (212) und quer von einer ersten Seite (213) zu einer zweiten Seite (214) erstreckt,
**dadurch gekennzeichnet, dass** das Verfahren ein Anordnen (AGCMT) von mindestens einem Schallreflektor (51, 52) quer zum Luftstrom umfasst, der einen schallreflektierenden Abschnitt (55) umfasst, der die aus dem Luftstrom (40) austretenden und zum Boden (100) gerichteten Schallwellen (95) zumindest in einer vom Boden wegführenden Richtung reflektiert; wobei der schallreflektierende Abschnitt (55) vom Boden (100) aus gesehen konvex und vom Himmel aus gesehen konkav ist.

## Claims

1. Aircraft (1) provided with a ducted rotor system (20), said system (20) comprising a hull (21) and a rotor (31) provided with vanes (32), the vanes (32) being disposed in an air stream (40) delimited by the hull (21) and rotatably movable about an axis of rotation (AXROT) of the rotor (31), the hull (21) extending longitudinally along a reverse direction (AR) from a structure (2) of the aircraft to a tail end, the hull (21) extending along an elevated direction (ELV) from a bottom (211) to an apex (212) and transversally from a first side (213) to a second side (214),
**characterised in that** said aircraft (1) comprises at least one acoustic reflector (51, 52), said acoustic reflector (51, 52) comprising an acoustically reflective section (55) located transversally with respect to the air stream to reflect along a direction moving away from the ground, acoustic waves (95) exiting from the air stream (40) by being directed to the ground (100); said acoustically reflective section (55) being convex, seen from the ground (100), and concave, seen from the sky.

2. Aircraft according to claim 1,
**characterised in that** said acoustically reflective section (55) extends under and to the right of the axis of rotation (AXROT), as well as at least into a horizontal plane (PH) when the aircraft (1) rests on a horizontal ground (100), this horizontal plane (PH) passing under the air stream (40), when the aircraft (1) rests on the horizontal ground (100).

3. Aircraft according to any one of claims 1 to 2,
**characterised in that** said acoustically reflective section (55) is secant to a vertical-transverse plane (PVT) containing the axis of rotation (AXROT) and vertical when the aircraft (1) rests on a horizontal ground (100).

4. Aircraft according to claim 3,
**characterised in that** said acoustically reflective section (55) is arranged in an angular range (SECT), present under the axis of rotation when the aircraft is on a horizontal ground, by extending longitudinally between a first inclined plane (PV1) and a second inclined plane (PV2) containing the axis of rotation (AXROT), the first inclined plane (PV1) being obtained by rotation of said vertical-transverse plane (PVT) about the axis of rotation (AXROT) along a first direction of rotation (ROT1) of a first angle (ANG1) greater than or equal to a minimum longitudinal angle, the second inclined plane (PV2) being obtained by rotation of said vertical-transverse plane (PVT) about the axis of rotation (AXROT) along a second direction of rotation (ROT2) opposite the first direction of rotation of a second angle (ANG2) greater than or equal to the minimum longitudinal angle.

5. Aircraft according to any one of claims 3 to 4,
**characterised in that** said acoustically reflective section (55) extends transversally spanwise to a boundary plane (PLIM1, PLIM2), the boundary plane (PLIM1, PLIM2) being obtained, when the aircraft (1) is on a horizontal ground, by rotation about a pivot axis (AXROT2) of a horizontal reference plane (PHREF) along a direction of rotation (ROT31, ROT32) to the reflective section by an angle (ANG31, ANG32), less than or equal to a maximum transverse angle, the horizontal reference plane (PHREF) being orthogonal to the vertical-transverse plane (PVT) and passing through a reference point (PREF) of the axis of rotation (AXROT), the pivot axis (AXROT2) passing through the reference point (PREF) and being orthogonal to the vertical-transverse plane (PVT).

6. Aircraft according to any one of claims 1 to 5,
**characterised in that** said at least one acoustic reflector (51, 52) is carried by the hull (21) and extends transversally from the hull (21).

7. Aircraft according to any one of claims 1 to 6,
**characterised in that** said at least one acoustic reflector (51, 52) is carried by a tail beam (10) of the structure (2) and extends along the reverse direction (AR) of a root (56) connected to the tail beam (10) to the acoustically reflective section (55).

8. Aircraft according to any one of claims 1 to 7,
**characterised in that** said at least one acoustic reflector (51, 52) is an empennage (90).

9. Aircraft according to any one of claims 1 to 8,
**characterised in that** said aircraft (1) comprises an actuator (80) connected to the acoustic reflector (51, 52) to make the acoustic reflector (51, 52) movable with respect to the hull (21), said aircraft (1) comprising at least one controller (81) configured to control said actuator (80) according to at least one input or to a human-machine interface (83) connected to the actuator (80).

10. Aircraft according to any one of claims 1 to 9,
**characterised in that** said hull (21) comprising successively an annular convergent (26) then an annular vane path (27) and an annular divergent (28), said at least one acoustic reflector (51, 52) comprises an acoustic reflector (51) on the side of said divergent (28).

11. Aircraft according to any one of claims 1 to 10,
**characterised in that** said hull (21) comprising successively an annular convergent (26) then an annular vane path (27) and an annular divergent (28), said at least one acoustic reflector (51, 52) comprises an acoustic reflector (51) having a face (56) extending a sector of the divergent (28) or of the convergent (26).

12. Aircraft according to any one of claims 1 to 11,
**characterised in that** said aircraft (1) comprises two so-called acoustic reflectors (51, 52) arranged transversally respectively on either side at least of the hull (21).

13. Aircraft according to claim 12,
**characterised in that** said two acoustic reflectors (51, 52) are asymmetric facing a vertical-longitudinal plane (PVL) passing through the hull (21).

14. Aircraft according to any one of claims 1 to 13,
**characterised in that** said air stream (40) extends from a first passage surface (401) to a second passage surface (402) parallel to one another, the first passage surface (401) and the second passage surface (402) being orthogonal to the axis of rotation (AXROT).

15. Aircraft according to any one of claims 1 to 14,
**characterised in that** a reflective face of said at least one acoustic reflector (51, 52) impacted by said acoustic waves comprises a surface acoustic treatment.

16. Method for reducing noise emitted to the ground with an aircraft (1) provided with a ducted rotor system (20), said system (20) comprising a hull (21) and a rotor (31) provided with vanes (32), the vanes (32) being disposed in an air stream (40) delimited by the hull (21) and rotatably movable about an axis of rotation (AXROT) of the rotor (31), the hull (21) extending longitudinally along a reverse direction (AR) from a structure (2) to a tail end, the hull (21) extending along an elevated direction (ELV) from a bottom (211) to an apex (212) and transversally from a first side (213) to a second side (214),
**characterised in that** said method comprises an arrangement (AGCMT) transversally with respect to the air stream of at least one acoustic reflector (51, 52) comprising an acoustically reflective section (55) reflecting at least along one direction, moving away from the ground, acoustic waves (95) which exit from the air stream (40) by being directed to the ground (100); said acoustically reflective section (55) being convex, seen from the ground (100), and concave, seen from the sky.
